# EUROPÄISCHE PATENTSCHRIFT

(11) **EP 3 241 706 B1**
(45) Veröffentlichungstag und Bekanntmachung des Hinweises auf die Patenterteilung: **11.12.2019**
(21) Anmeldenummer: 17167761.0
(22) Anmeldetag: 24.04.2017
(51) Int. Cl.: B60N 3/10, A24F 19/02, A24F 19/06

(54) **VORRICHTUNG UND SYSTEM ZUR AUFNAHME VON GEGENSTÄNDEN IN EINEM FAHRZEUG**
DEVICE AND SYSTEM FOR HOLDING OBJECTS IN A VEHICLE
DISPOSITIF ET SYSTÈME DE RÉCEPTION D'OBJETS DANS UN VÉHICULE

(30) Priorität: 02.05.2016 DE 202016102317 U
(43) Veröffentlichungstag der Anmeldung: 08.11.2017
(73) Patentinhaber: Minda KTSN Plastic Solutions Gmbh & Co.KG, 01796 Pirna (DE)
(72) Erfinder: Rehn, Marco, 01309 Dresden (DE); Muschick, Micha, 02625 Bautzen (DE)
(74) Vertreter: Lins, Martina

(56) Entgegenhaltungen:
- DE-A1- 3 210 835
- DE-A1-102007 027 533
- DE-U1-202014 102 714
- JP-A- 2003 312 375

## Beschreibung

Die Erfindung betrifft eine Vorrichtung zur Aufnahme von Gegenständen in einem Fahrzeug mit einem Grundkörper. In einem Fahrzeug, beispielsweise einem Kraftfahrzeug, existieren eine Vielzahl von Ablagemöglichkeiten, um Gegenstände des täglichen Gebrauches oder des gelegentlichen Gebrauches sicher und griffbereit ablegen zu können. Hierzu zählen neben den herkömmlichen Handschuhfächern die Ablagefächer in den Türen oder Seitenverkleidungen der Fahrzeugwände sowie Dosen oder Becherhalter und schalenartige Vertiefungen in dem Bereich der Armlehnen oder Mittelkonsolen.

Nachteilig an den bisher bekannten Lösungen ist, dass die vorgenommene Zuordnung der Funktionen der jeweiligen Aufnahmen oder Ablagen nicht oder nur unter hohem Aufwand zu ändern ist.

Die DE 10 2007 027533 A1 betrifft einen Getränkehalter für ein Kraftfahrzeug mit einem in ein Staufach einsetzbaren, formstabilen Grundkörper, an dem zumindest ein bewegliches Halteelement für ein Behältnis angeordnet ist. In dem Staufach können eine Nut sowie eine Rastaufnahme angeordnet sein. An dem Grundkörper können außenumfänglich angeordnete Rippen ausgebildet sein, die bei einem in das Staufach eingesetzten Getränkehalter in die Nuten eingeführt sind. Der Grundkörper weist außen umfangseitig ein Rastmittel auf, das bei einem eingesetzten Grundkörper mit dem Rastaufnahmen in Eingriff steht.

Die DE 20 2014 102 714 U1 betrifft eine Becherhalteranordnung mit einem Gehäuse mit einem Schienenelement und einem Einsatz, der verstellbar und entfernbar auf dem Schienenelement aufgenommen ist. Der Einsatz kann in das Schienenelement eingeführt werden. In verschiedenen Höhen für den Einsatz sind Sperren an dem Schienenelement ausgebildet.

Aus der JP 2003-312375 A1 ist eine Vorrichtung nach dem Oberbegriff des Anspruchs 1 zum Verbinden von Mobiltelefonen an Fahrersitzen bekannt, bei dem ein Kabel, das mit weiteren Einrichtungen eines Kraftfahrzeuges verbunden ist, durch ein Durchgangsloch in ein Seitenablagefach des Fahrzeugsitzes geführt ist. Innerhalb des Seitenablagefaches ist ein Kunststoffeinsatz mit einem Kabelführungskanal und einer Aufnahme für den Stecker, der dem Mobiltelefon zugeordnet ist, angeordnet. Die Befestigung kann über einen Stift erfolgen, der durch ein Durchgangsloch in dem Ablagefach hindurchragt und in eine Bohrung innerhalb des Kunststoffeinsatzes eingreift.

Aufgabe der vorliegenden Erfindung ist es, eine Vorrichtung und ein System zur Aufnahme von Gegenständen bereit zu stellen, die eine Individualisierung durch den Endverbraucher erleichtern oder die Anpassung an unterschiedliche Ausstattungsvarianten bei der Erstausstattung von Fahrzeugen vereinfacht.

Erfindungsgemäß wird diese Aufgabe durch eine Vorrichtung mit den Merkmalen des Hauptanspruches und eines Systems mit den Merkmalen des nebengeordneten Anspruches gelöst. Vorteilhafte Ausgestaltung und Weiterbildungen der Erfindung sind in den Unteransprüchen, der Beschreibung sowie den Figuren offenbart.

Die Vorrichtung zur Aufnahme von Gegenstände in einem Fahrzeug sieht einen Grundkörper, in dem eine Ausnehmung zur Aufnahme auswechselbarer Einsätze ausgebildet ist, und zumindest einen Einsatz vor, wobei an dem Grundkörper zumindest eine Ausrichteinrichtung zur Ausrichtung und zumindest eine Rasteinrichtung zur Festlegung des Einsatzes in der Ausnehmung angeordnet ist. Über den auswechselbaren Einsatz ist es möglich, bei einem gleichbleibenden Basisteil, nämlich dem Grundkörper, zunächst eine Basiseinrichtung zur Aufnahme von Gegenständen bereit zu stellen, die durch den jeweiligen Einsatz, der in die Ausnehmung in dem Grundkörper eingesetzt wird, an die jeweiligen Bedürfnisse des Nutzers oder an die unterschiedlichen Ausstattungsvarianten bei der Herstellung des Fahrzeuges angepasst werden kann. Die Ausrichteinrichtungen ermöglichen eine präzise Montage in der Ausnehmung und eine passgenaue Zuordnung des Einsatzes in die Ausnehmung des Grundkörpers, so dass trotz der Auswechselbarkeit eine hochwertige optisehe Anmutung erzielt werden kann. Die Erfindung sieht vor, dass in dem Grundkörper zumindest eine Schnittstelle zur Bereitstellung einer Strom- und/oder Datenübertragung an den Einsatz oder auch an einen in die Ausnehmung eingesetzten Gegenstand angeordnet ist. Die Schnittstelle kann als zentrale Schnittstelle Daten und Strom beispielsweise durch Kontaktflächen oder sogenannte Universalpins bereitstellen, die seitens des Grundkörpers wiederum mit einem Computer oder einer Steuereinrichtung oder anderen Kommunikationseinrichtungen innerhalb des Fahrzeuges fest verbunden sind. Die Verbindung kann beispielsweise über Kabel oder auch kabellos erfolgen. Über die zunächst eine Schnittstelle kann eine zentrale Anbindung an die Versorgungseinrichtungen und Kommunikationseinrichtungen des Fahrzeuges erfolgen, so dass über den Einsatz oder aber auch direkt über die standardisierte Schnittstelle das jeweilige Zubehörgerät oder das in dem Einsatz integrierte Bauteil mit Daten und/oder Strom versorgt werden kann.

Der Grundkörper kann durch die Ausnehmung eine schalenartige, nach unten im Wesentlichen oder vollständig geschlossene Einrichtung darstellen, die grundsätzlich auch zur Aufnahme von Gegenständen dienen kann. Durch einen unten und seitlich geschlossenen Aufbau des Grundkörpers und der Ausnehmung wird ein maximaler Aufnahmeraum bereitgestellt, wobei eine Einführöffnung für den jeweiligen Einsatz oder für das Hineinlegen und Herausnehmen von Gegenständen oder dergleichen durch die Einführöffnung ausgebildet wird.

An dem Grundkörper können mehrere Ausrichteinrichtungen in unterschiedlichen Orientierungen angeordnet oder ausgebildet sein, so dass der Einsatz oder die Einsätze präzise im Raum ausgerichtet und dem Grundkörper zugeordnet werden können. Bevorzugt sind an dem jeweiligen Einsatz zu der Ausrichteinrichtung oder den Ausrichteinrichtungen korrespondierende Zentriereinrichtungen angeordnet oder ausgebildet, die beispielsweise formschlüssig mit den Ausrichteinrichtungen in Eingriff treten und darüber eine Ausrichtung und des Einsatzes zu dem Grundkörper und eine Blockierung in zumindest einer Bewegungsrichtung oder einem Freiheitsgrad bewirken.

Der durch die Ausnehmung in dem Grundkörper gebildete Innenraum kann gepolstert oder beschichtet sein, um darin aufgenommene Gegenstände ohne Kratzgefahr lagern zu können. Darüber hinaus dient die Polsterung zur Geräuschminderung und zur Schalldämpfung, wenn ein Einsatz in die Ausnehmung eingesetzt wird. Die Polsterung kann beispielsweise durch eine Be-flockung oder durch einen Überzug oder eine Beschichtung mit einem stoßdämpfenden und schalldämpfenden Material erfolgen.

Der Grundkörper ist vorteilhafterweise als Mittelkonsole oder Teil einer Mittelkonsole in einem Kraftfahrzeug ausgebildet, kann jedoch auch als Teil einer Seitenverkleidung oder einer Mittelabdeckung in anderen Fahrzeugen dienen.

Zur lösbaren Festigung und sicheren Fixierung des Einsatzes in der Ausnehmung ist die Rasteinrichtung in einer Weiterbildung der Erfindung als Kugelrastung mit einer vorstehenden Kalotte oder einer kalottenförmigen Rastausnehmung ausgebildet, je nachdem ob an dem Einsatz eine zu der Kalotte des Grundkörpers korrespondierend angeordnete Rastausnehmung oder eine zu der Rastausnehmung des Grundkörpers korrespondierend angeordnete Kalotte aufweist. Die Kugelrastung hat den Vorteil, dass über sie eine Selbstzentrierung erfolgt. Die Lagerung der Kalotte kann an dem Einsatz oder dem Grundkörper elastisch erfolgen, beispielsweise durch Anordnung, Anformung oder Umformung eines Auslegers oder eines Vorsprunges. Alternativ oder ergänzend kann auch die kalottenförmige Rastausnehmung eine elastische Komponente aufweisen, beispielsweise durch parallele Stege oder Schlitze, die eine Aufweitung oder eine Verlagerung gegen eine Vorspannrichtung ermöglichen, so dass die Kugelrastung unter Vorspannung den Einsatz in dem Grundkörper halten kann. Darüber hinaus ist über die Kugelrastung eine einfache Entnahme des Einsatzes möglich, da der Einsatz entgegen der Einführrichtung aus der Einführöffnung entnommen werden kann, wenn die Haltekraft, die durch die elastische Kalotte oder Rastausnehmung aufgebracht wird, überwunden worden ist. Alternativ zu einer Kugelrastung kann die reversible Festlegung auch über andere Formschlusselemente erfolgen, bevorzugt über federbelastete Formschlusselemente, um die Sicherheit der Verriegelung zu erhöhen.

An dem Grundkörper kann ein Absatz ausgebildet sein, der sich an die Ausnehmung anschließt, um einen korrespondierend zu dem Absatz ausgebildeten, seitlich von diesem abragenden Rand aufzunehmen. Der Rand, der ebenso wie der Absatz umlaufend um den Einsatz beziehungsweise die Ausnehmung ausgebildet sein kann, kann bündig mit dem Absatz abschließen, so dass nur ein geringer Spalt zwischen dem Absatz und dem Rand vorhanden ist. Die Absatzhöhe entspricht im Wesentlichen der Höhe des Randes, so dass auch im Bereich der oberen Ebene oder des oberen Abschlusses des Einsatzes ein bündiger oder nahezu bündiger Übergang von dem Einsatz zu dem Grundkörper vorliegt. Um den Einsatz aus der Ausnehmung entnehmen zu können ist in dem Rand zumindest ein Eingriffsabschnitt mit reduzierter Breite ausgebildet, so dass über einen Gegenstand oder mit einem Fingernagel oder mit einem Finger der Rand hintergriffen werden kann, um den Einsatz aus der Ausnehmung herauszunehmen.

An dem Grundkörper kann ein Verschlusselement zur Abdeckung des Einsatzes oder der Ausnehmung gelagert sein. Das Verschlusselement kann verschieblich und/oder verschwenkbar an dem Grundkörper gelagert sein und den Einsatz und/oder die Ausnehmung vollständig oder teilweise überdecken. Das Verschlusselement kann verschließbar ausgebildet sein, also ein Schloss oder eine Verriegelungseinrichtung aufweisen, beispielsweise einen elektronisch aktuierbaren Schließmechanismus.

In dem jeweiligen Einsatz kann zumindest ein Aufnahmebereich für aufzunehmende Gegenstände angeordnet oder ausgeformt sein, der korrespondierend zu dem aufzunehmenden Gegenstand oder den aufzunehmenden Gegenständen ausgeformt ist. Hierzu bieten sich insbesondere schlitzförmige Ausnehmungen für Münzen, Karten oder Schlüssel oder runde oder zumindest teilweise abgerundete Ausnehmungen für Getränkebehälter wie Becher, Dosen, Flaschen oder Tassen an. Neben einer im Wesentlichen runden Ausgestaltung dieser Behälteraufnahmen können davon abstehende und an die Aufnahmen angrenzende Fächer ausgebildet sein, in die beispielsweise Kühlelemente eingesetzt werden können.

In dem Einsatz kann zumindest eine Schnittstelle für ein Datentransfer und/oder Energietransfer an ein Endgerät angeordnet sein. Die Schnittstelle kann als USB-Buchse, SD-Kartenleser, eine andere Datenschnittstelle oder auch Induktionsfläche zum Laden für Mobiltelefone ausgebildet sein. Im Einsatz kann ein integrierter Zigarettenanzünder angeordnet sein, der entnehmbar ausgebildet ist, wobei die Energieversorgung über die Kontakte an dem Einsatz und in dem Grundkörper gewährleistet wird. In dem Einsatz selbst kann ein entnehmbarer, feuerfester Einsatz als Aschenbecher angeordnet sein. Die entnehmbare Festlegung des Einsatzes in dem Einsatz erleichtert die Reinigung und Entleerung des Aschenbechereinsatzes.

Die Ausnehmung ist im Wesentlichen rechteckig mit abgerundeten Ecken ausgebildet, um eine eindeutige Orientierung der Einsätze in dem Grundkörper zu gewährleisten. Es können Poka-Yoke-Einrichtungen an dem Grundkörper und/oder dem Einsatz angeordnet sein, um eine definierte Orientierung der Komponenten zueinander zu gewährleisten.

Das erfindungsgemäße System aus einem Grundkörper und mehreren, auswechselbaren Einsätzen, wie sie oben beschrieben worden sind, erleichtern eine Individualisierung der Fahrzeuginnenausstattung und ermöglichen eine einfache Anpassung an unterschiedliche Einsatzzwecke. Die Einsätze können zusammen mit dem Grundkörper an den Endkunden ausgeliefert werden, um eine eigenständige Individualisierung zu ermöglichen.

Nachfolgend werden Ausführungsbeispiele in der Erfindung genannt die beigefügte Figur näher erläutert. Es zeigen:
- Figur 1-: eine Schrägdraufsicht auf eine Mittelkonsole mit montiertem System;
- Figur 2-: eine Untenansicht eines Einsatzes;
- Figur 3-: eine Schrägdraufsicht auf einem Grundkörper ohne Einsatz;
- Figuren 4 bis 7-: Varianten des Systems;
- Figur 8-: eine Untenansicht eines Einsatzes;
- Figur 9-: eine Detailansicht eines Einsatzes;
- Figur 10-: eine Schnittdarstellung durch eine Vorrichtung mit eingesetztem Einsatz; sowie
- Figur 11-: eine Detailansicht eines Grundkörpers ohne Einsatz.

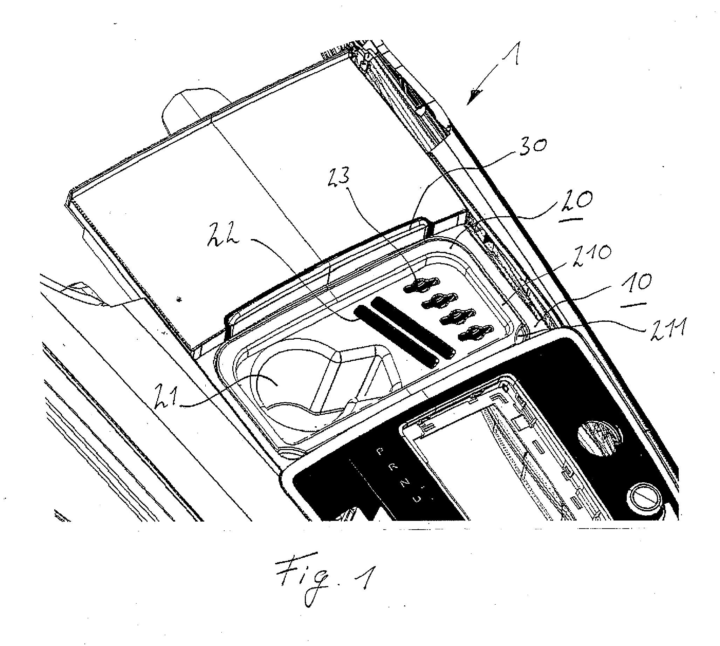

Figur 1 zeigt in einer Schrägdraufsicht eine Mittelkonsole 1 zwischen einer Schaltkulisse für ein Automatikgetriebe im unteren Teil in der Darstellung und einer nicht dargestellten Instrumententafel. Die Vorrichtung dient zur Aufnahme von Gegenständen und weist einen Grundkörper 10 auf, zwischen der Schaltkulisse und der nicht dargestellten Instrumententafel angeordnet ist. In dem Grundkörper 10, der einteilig als Kunststoffteil ausgebildet sein kann, aber auch aus Faserwerkstoffen, Faserverbundwerkstoffen, Metall oder aus einem Werkstoffmix sowie mehrteilig hergestellt sein kann, ist eine Ausnehmung ausgebildet, in der ein Einsatz 20 eingesetzt ist. Der Einsatz 20 ist in dem dargestellten Ausführungsbeispiel als einteiliges Kunststoffspritzgussteil ausgebildet und austauschbar in dem Grundkörper 10 eingesetzt und dort gehalten. In dem Einsatz 20 sind im dargestellten Ausführungsbeispiel drei Aufnahmebereiche 21, 22, 23 ausgebildet, die zur Aufnahme von Gegenständen dienen. Die Aufnahmebereiche 21, 22, 23 können entweder einstückig in dem Einsatz 20 ausgebildet oder aber nachträglich daran befestigt oder fixiert sein. Auch ist es möglich, dass die Aufnahmebereiche 21, 22, 23 im Rahmen eines 2-K-Spritzgussverfahrens aus einem anderen Material in dem Einsatz 20 ausgebildet beziehungsweise befestigt sind. Die Aufnahmebereiche 21, 22, 23 können auch reversibel in dem Einsatz 20 angeordnet und insbesondere befestigt sein.

In dem Grundkörper 10 ist eine Vertiefung ausgebildet, die im Wesentlichen der Außenkontur des Einsatzes 20 entspricht, sodass die Vertiefung als Ausrichteinrichtung zur Ausrichtung des Einsatzes 20 dient. Um zu verhindern, dass der Einsatz 20 in die innerhalb des Grundkörpers 10 eingebachte Ausnehmung fällt, ist an dem Einsatz 20 ein Rand 210 ausgebildet oder angeordnet, der als Auflager zur Abstützung auf einem Absatz der Vertiefung des Grundkörpers 10 dient. An dem Rand 210, der in dem dargestellten Ausführungsbeispiel umlaufend ausgebildet ist, sind zwei Eingriffsabschnitte 211 mit reduzierter Breite ausgebildet, um ein Entnehmen des Einsatzes 20 aus dem Grundkörper 10 und aus der Ausnehmung zu ermöglichen beziehungsweise zu erleichtern. Es ist möglich und vorgesehen, statt einer vollständig umlaufenden Vertiefung nur eine teilweise Vertiefung oder einen teilweise vorhandenen Absatz an oder innerhalb des Grundkörpers 10 vorzusehen, um dort den Einsatz 20 zu positionieren. Statt einer Vertiefung können auch Erhöhungen an dem äußeren Umfang des Einsatzes 20 am Grundkörper 10 angeordnet oder ausgebildet sein, um den Einsatz 20 in der Ausnehmung auszurichten.

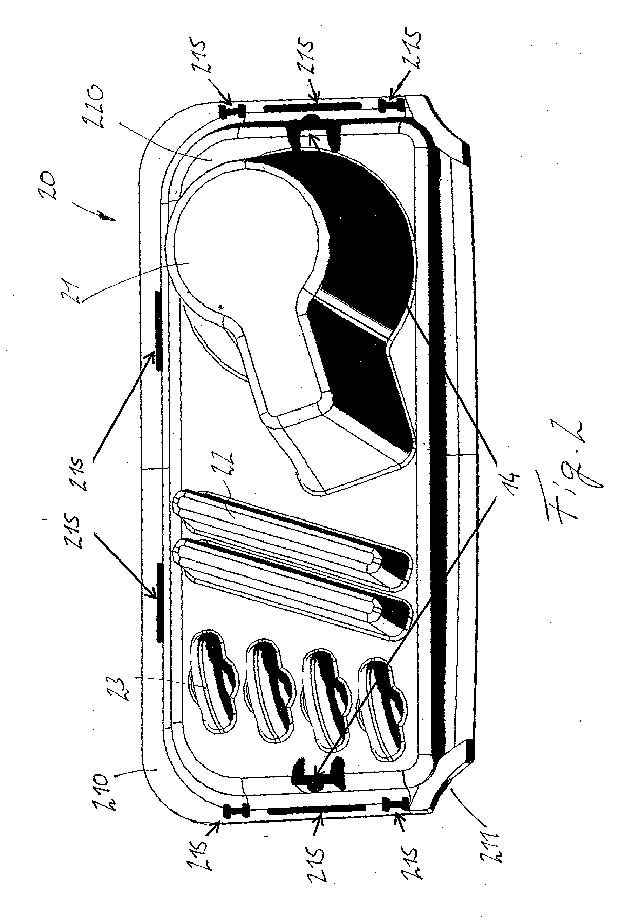

Figur 2 zeigt einen Einsatz 20 gemäß Figur 1 in Untenansicht. Der Einsatz 20 weist eine im Wesentlichen rechteckige Kontur mit abgerundeten Ecken auf. Der umlaufende Rand 210 ist an zwei Eckbereichen mit einem Ausschnitt versehen, so dass dort eine reduzierte Breite vorhanden ist und Eingriffsabschnitte 211 gebildet werden, um dort den Rand 210 zur Entnahme aus dem nicht dargestellten Grundkörper zu hintergreifen.

Der Einsatz 20 weist eine von dem Rand 210 zurückgesetzte Grundebene 220 auf, sodass sich von unten gesehen ein umlaufender Vorsprung von dem Rand 210 zu der Grundebene 220 bildet. Von der Grundebene 220 erstrecken sich nach unten, in der Untendarstellung gemäß Figur 2 in Richtung aus der Bildebene heraus, die Aufnahmebereiche 21, 22, 23, die zur Aufnahme von Gegenständen dienen. Ein erster Aufnahmebereich 21 dient als Getränkehalter und kann entweder einstückig oder zu einem separaten Material hergestellt sein. Zwei zweite Aufnahmebereiche 22 dienen als Kartenhalter, vier dritte Aufnahmebereiche 23 dienen zur Aufnahme von Münzen. Alle Aufnahmebereiche 21, 22, 23 können entweder einstückig mit dem Einsatz 20 ausgebildet oder als separate Komponenten gefertigt und dann an dem Einsatz 20 befestigt werden.

An dem Rand 210 sind an drei Seiten Zentrierelemente 215 angeordnet oder ausgebildet, die zur Ausrichtung und Zentrierung des Einsatzes 20 innerhalb des Grundkörpers dienen. An der Längsseite sind zwei Zentrierrippen 215 zur Ausrichtung in einer ersten Richtung, beispielsweise einer X-Richtung vorgesehen, rechtwinklig dazu sind an den Schmalseiten jeweils eine Zentrierrippe 215 zur Ausrichtung in eine rechtwinklig dazu orientierte Richtung, beispielsweise in Y-Richtung angeordnet oder ausgebildet. Neben den Zentrierrippen 215 an den Schmalseiten sind jeweils zwei Zentrierelemente 215 zur Ausrichtung des Einsatzes 20 in die dritte Richtung, beispielsweise Z-Richtung vorgesehen. Die Zentrierelemente 215 können modifiziert werden, die Zentrierelemente 215 zur Anpassung in Z-Richtung können beispielsweise in der Höhe reduziert werden, um eine möglichst bündige Einpassung mit der Oberfläche des Grundkörpers zu ermöglichen.

In dem dargestellten Ausführungsbeispiel sind an den beiden Schmalseiten von der Grundebene 220 abragend je eine Rasteinrichtung 14 angeordnet, im dargestellten Beispiel angeformt, um den Einsatz 20 in einer Ausnehmung in dem Grundkörper 10 festzulegen und dort formschlüssig und reversibel zu fixieren. An der Rasteinrichtung 14, die später noch näher erläutert werden wird, sind Rastelemente ausgebildet, die formschlüssig in eine korrespondierende Einrichtung an dem Grundkörper 10 eingreifen und dort den Einsatz 20 fixieren. Die Rasteinrichtung 14 oder die Rasteinrichtungen 14 können ebenfalls als separates Element ausgebildet und an dem Grundkörper 20 befestigt sein.

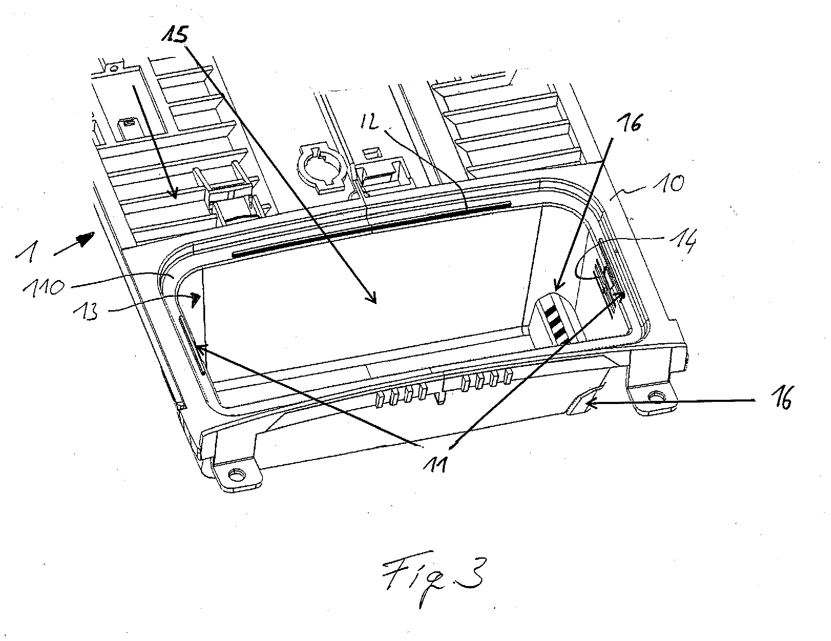

Figur 3 zeigt den Grundkörper 10 in einer Mittelkonsole 1 ohne Einsatz. Es ist zu erkennen, dass der Grundkörper 10 im Wesentlichen einstückig ausgebildet ist und eine Ausnehmung 15 aufweist, die im dargestellten Ausführungsbeispiel als eine schalenartige, geschlossene Aufnahme mit einer Einführöffnung 13 für den jeweiligen Einsatz 20 ausgebildet ist. Die Ausnehmung 15 umgibt ein Absatz 110, der zur Auflage des Randes 210 des nicht dargestellten Einsatzes 20 dient. Der Absatz 110 ist zur Oberfläche des Grundkörpers 10 zurückgesetzt und bildet somit eine Vertiefung aus, die so tief ist, dass die Oberfläche des Einsatzes 20 bündig mit der Oberfläche des Grundkörpers 10 abschließt.

Sowohl an den Schmalseiten als auch an der einen Längsseite des Absatzes 110, der ein im Wesentlichen rechteckige Form mit abgerundeten Ecken aufweist, sind Ausrichteinrichtungen 11, 12 angeordnet, um den nicht dargestellten Einsatz zu zentrieren, formschlüssig in korrespondierende Ausnehmungen innerhalb des Einsatzes 20 einzugreifen und damit ein nicht ungewollt verlagerbares, klapperfreies Anordnen des Einsatzes innerhalb der Ausnehmung 15 zu ermöglichen.

An dem Boden der Ausnehmung 15 ist eine Schnittstelle 16 zur Übertragung von Daten oder elektrischer Energie angeordnet, die Universalpins aufweist, sodass eine datentechnische und stromtechnische Schnittstelle zu einem Einsatz 20 durch Einsetzen und Aufstecken auf die Schnittstelle 16 erfolgen kann. Über eine außenliegende Schnittstelle 16 an dem Grundkörper 10 kann eine Verbindung zu einer Stromquelle oder einer Datenverarbeitungseinrichtung in dem Fahrzeug oder einer anderen elektronischen Einrichtung hergestellt werden.

Im Bereich der Schmalseiten der Ausnehmung 15 ist in den Wänden der schalenartigen Aufnahme eine Rasteinrichtung 14 ausgebildet, die jeweils korrespondierend zu der Rasteinrichtung 14 an dem Einsatz ausgebildet und positioniert ist. In dem dargestellten Ausführungsbeispiel ist die Rasteinrichtung 14 als Rastausnehmung ausgebildet, in die formschlüssig und federnd ein Formschlusselement eingreift.

Die Ausrichteinrichtungen 11, 12 können elastisch ausgebildet sein und entweder einstückig oder als separate Bauteile an dem Grundkörper 10 angeordnet oder ausgebildet werden. Die Ausrichteinrichtungen 11, 12 können zusätzlich zu der Ausrichtung des Einsatzes 20 innerhalb des Grundkörpers über den Rand 110 wirksam sein.

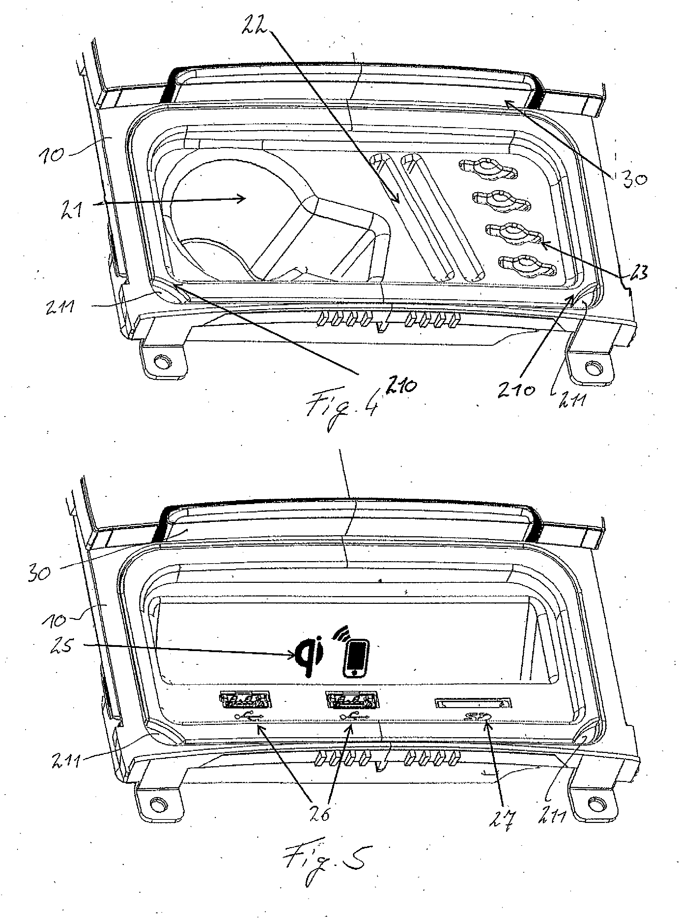

Figur 4 zeigt in einer Detailansicht den Einsatz 20 gemäß Figur 2 im eingebauten Zustand. Der Grundkörper 10 gemäß Figur 3 ist mit einem Verschlusselement 30 in Gestalt einer Klappe oder eines Auszuges versehen. Das Verschlusselement 30 ist in der dargestellten Position vollständig in der Mittelkonsole oder an dem Grundkörper 10 eingefahren, so dass der Zugang zu der Ausnehmung 15 in dem Grundkörper sowie zu den Aufnahmebereichen 21, 22, 23 in dem Einsatz 20 vollständig gegeben ist. Im geschlossenen Zustand des Verschlusselementes 30 ist der Zugang zu dem Einsatz 20 vollständig versperrt. Der Rand 210 des Einsatzes 20 liegt bündig sowohl umfänglich als auch in der Höhe an dem Grundkörper 10 in der Vertiefung an, die Eingriffsabschnitte 211 an den Eckbereichen des Einsatzes 20 ermöglichen ein leichtes Entnehmen des Einsatzes 20 aus dem Grundkörper.

Figur 5 zeigt eine Variante mit einem anderen Einsatz 20, bei dem der Einsatz 20 mit der Schnittstelle 16 innerhalb des Grundkörpers gekoppelt ist. An dem Einsatz 20 sind drei Schnittstellen 25, 26, 27 zur Daten- und Energieübertragung auf angeschlossene oder eingesetzte Gegenstände angeordnet oder ausgebildet. Eine Induktionsladefläche 25 ist an einer Aufnahmeschale für ein Mobiltelefon ausgebildet, zwei USB-Buchsen 26 sowie ein SD-Kartenleser/SD-Kartenhalter 27 sind entlang einer Längsseite an dem Einsatz 20 angeordnet. Durch das Einsetzen des Einsatzes 20 in den Grundkörper 10 erfolgt neben einer mechanischen Fixierung auch eine elektrische Kontaktierung mit der Schnittstelle 16, sodass eine einfache Individualisierung an dem jeweiligen Einsatzzweck erfolgen kann.

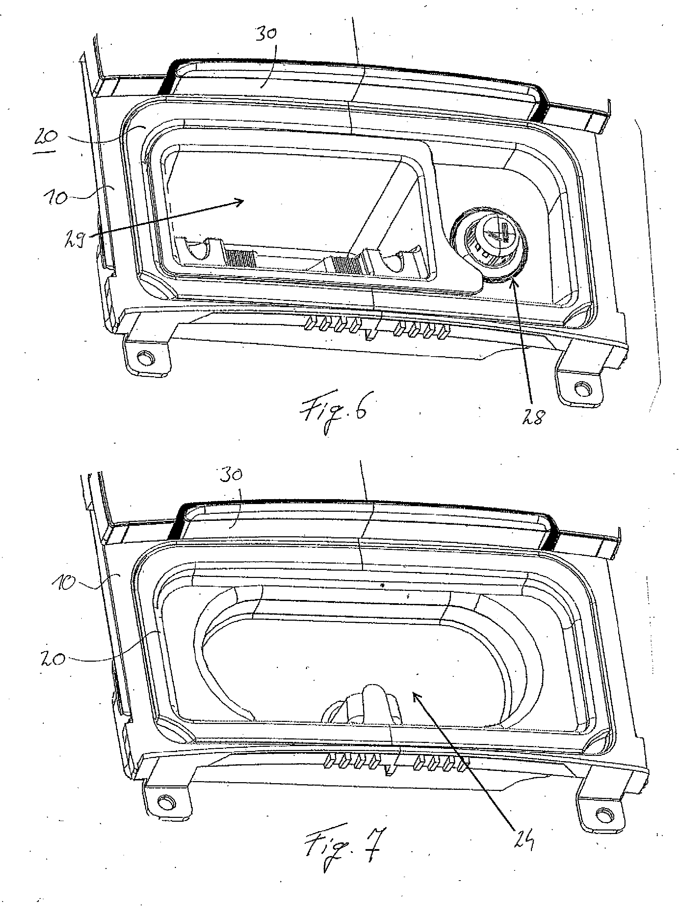

In der Figur 6 ist eine weitere Variante der Erfindung mit einem Aschenbechereinsatz 29 aus einem feuerfesten Material sowie einem Zigarettenanzünder 28 dargestellt. Der gesamte Einsatz 20 wird in dem Grundkörper 10 eingesetzt und über die Schnittstelle 16 elektrisch kontaktiert, sodass der Zigarettenanzünder 28 mit ausreichend Energie versorgt werden kann. Der feuerfeste Aschenbechereinsatz 29 kann einstückig mit dem Einsatz 20 ausgebildet oder alternativ daran aus einem anderen Material gefertigt und befestigt sein.

Figur 7 zeigt die Erfindung in Gestalt eines Einsatzes zur Aufnahme einer Brille oder einer Sonnenbrille mit einem Aufnahmebereich 24, der korrespondierend zu dem aufzunehmenden Gegenstand, vorliegend einer Brille, geformt ist.

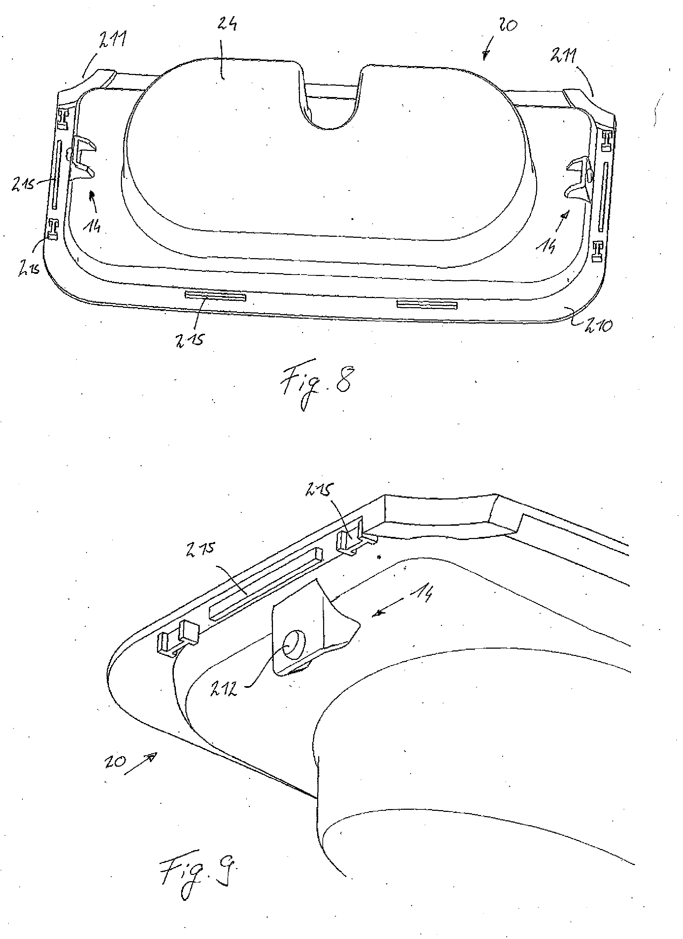

Figur 8 zeigt den Einsatz 20 gemäß Figur 7 in Untenansicht. Neben dem Aufnahmebereich 24 für die Brille sind die Zentrierelemente 215 sowie die Rasteinrichtungen 14 zu erkennen. Die Zentrierelemente 215 sind im Bereich des Randes 210 angeordnet, die Rasteinrichtung 14 im Bereich der Grundebene 220.

Figur 9 zeigt eine Detaildarstellung des Einsatzes 20 gemäß Figur 8 mit der Rasteinrichtung 14, die als Vorsprung ausgebildet ist und eine Kalotte 212 aufweist, die so ausgebildet und positioniert ist, dass sie in eine korrespondierende Rastausnehmung innerhalb des Grundkörpers, vorliegend in einer Seitenwand des Grundkörpers 10, der die Ausnehmung 15 umschließt, formschlüssig eingreifen kann. Die Kalotte 212 ist aufgrund der U-förmigen Ausgestaltung des Kalottenträgers vergleichsweise starr positioniert, eine elastische Lagerung ist nicht vorgesehen. In einer alternativen Ausgestaltung kann die Kalotte 212 federnd gelagert sein, um ein Einführen in die Ausnehmung 15 zu erleichtern und einen Eingriff in einen Hinterschnitt oder in eine korrespondierende Ausnehmung oder in ein korrespondierendes Formschlusselement zu erleichtern beziehungsweise zu ermöglichen.

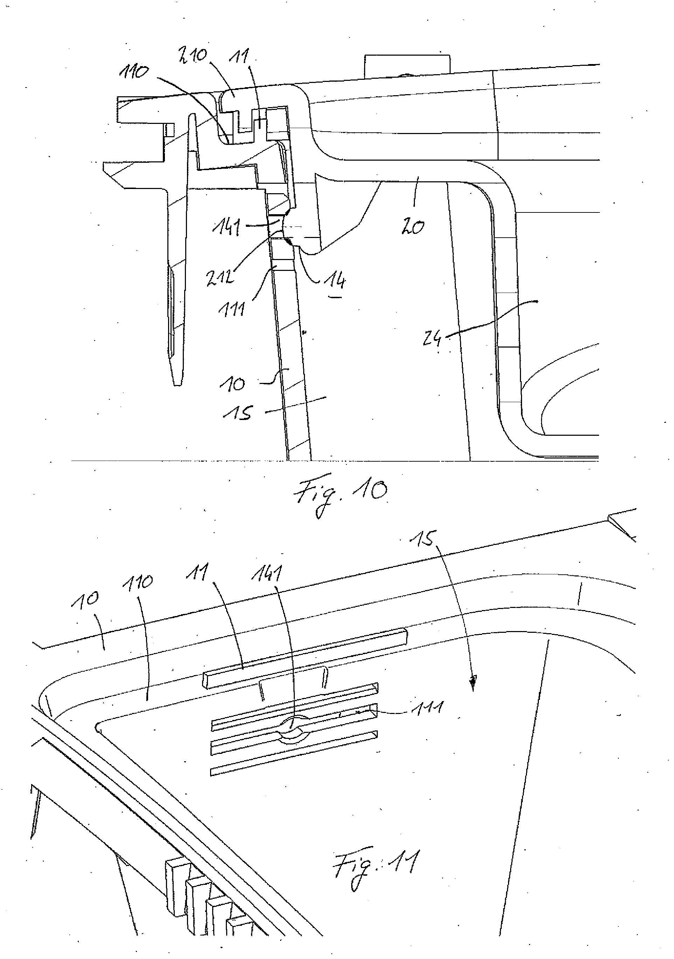

Figur 10 zeigt eine Schnittdarstellung durch ein System aus einem Grundkörper 10 mit einem eingesetzten Einsatz 20. In dem Grundkörper 10 ist die Ausnehmung 15 ausgebildet. Von der Oberfläche des Grundkörpers 10 ist eine Vertiefung vorgesehen, die den Absatz 110 bildet. Von dem Absatz 110 ragt eine Ausrichteinrichtung 11 in Gestalt eines Vorsprunges nach oben in Richtung auf die Einführöffnung 13. Die Ausnehmung 15 ist von einer Wandung umgeben, in der eine Rastausnehmung 141 ausgebildet ist. Die Rastausnehmung 141 ist angeordnet und ausgebildet, um die Kalotte 212 der Rasteinrichtung 14 an dem Einsatz 20 aufzunehmen. Alternativ zu der dargestellten Ausführungsform ist es auch möglich, eine Rastausnehmung an dem Einsatz 20 und eine Kalotte 212 oder eine andere Formschlusseinrichtung, die korrespondierend zu der Rastausnehmung 141 in dem Grundkörper 10 oder an dem Grundkörper 10 ausgebildet ist, vorzusehen. Neben einer Kalotte 212 können andere Formschlusselemente vorgesehen sein, über die ein Einführen und Festlegen des Einsatzes 20 an dem Grundkörper 10 erfolgen kann.

In der Wand des Grundkörpers 10, die die Ausnehmung 15 umgibt, sind Schlitze 111 eingearbeitet, durch die eine Elastizität der Wandung bereichsweise ermöglicht wird, so dass bei dem Einführen des Einsatzes 20 in die Ausnehmung 12 die durch die Schlitze 111 gebildeten Stege zurückfedern und damit eine Rastung des Einsatzes 20 innerhalb des Grundkörpers 10 ermöglichen. Zur Entnahme wird eine entgegen der Einführrichtung gerichtete Kraft auf den Rand 210 ausgeübt. Die formschlüssige Verriegelung, die durch eine Rückstellkraft entweder der Wand oder des Grundkörpers 10 gesichert wird, wird aufgehoben und der Einsatz 20 kann entnommen und gegen einen anderen Einsatz ausgetauscht werden.

Figur 11 zeigt eine Detailansicht des Grundkörpers 10 mit dem vertieft zur Oberfläche ausgebildeten Absatz 110, der Ausrichteinrichtung 11 an der Schmalseite sowie der Rastausnehmung 114 in Gestalt einer Bohrung oder kugligen Ausnehmung zwischen zwei Stegen, die durch Schlitze 111 innerhalb der Wand gebildet werden.

## Patentansprüche

1. Vorrichtung zur Aufnahme von Gegenständen in einem Fahrzeug mit einem Grundkörper (10), in dem eine Ausnehmung (15) zur Aufnahme auswechselbarer Einsätze (20) ausgebildet ist, und zumindest einem Einsatz (20), wobei an dem Grundkörper (10) zumindest eine Ausrichteinrichtung (11, 12) zur Ausrichtung und zumindest eine Rasteinrichtung (14) zur Festlegung des Einsatzes (20) in der Ausnehmung (15) angeordnet sind, **dadurch gekennzeichnet, dass** in dem Grundkörper (10) zumindest eine Schnittstelle (16) zur Bereitstellung einer Strom- und/oder Datenübertragung an den Einsatz (20) angeordnet ist.

2. Vorrichtung nach Anspruch 1, **dadurch gekennzeichnet, dass** die Ausnehmung (10) als schalenartige Aufnahme mit einer Einführöffnung (13) für den jeweiligen Einsatz (20) ausgebildet ist.

3. Vorrichtung nach Anspruch 1 oder 2, **dadurch gekennzeichnet, dass** an dem Grundkörper (10) mehrere Ausrichteinrichtungen (11, 12) in unterschiedlichen Orientierungen angeordnet sind.

4. Vorrichtung nach einem der voranstehenden Ansprüche, **dadurch gekennzeichnet, dass** der durch die Ausnehmung (15) gebildete Innenraum gepolstert oder beschichtet ist.

5. Vorrichtung nach einem der voranstehenden Ansprüche, **dadurch gekennzeichnet, dass** der Grundkörper (10) als Mittelkonsole (1) oder Teil einer Mittelkonsole (1) in einem Kraftfahrzeug ausgebildet ist.

6. Vorrichtung nach einem der voranstehenden Ansprüche, **dadurch gekennzeichnet, dass** die Rasteinrichtung (14) als Kugelrastung mit einer vorstehenden Kalotte oder einer kalottenförmigen Rastausnehmung (141) ausgebildet ist.

7. Vorrichtung nach Anspruch 6, **dadurch gekennzeichnet, dass** an dem Einsatz (20) eine zu einer Kalotte des Grundkörpers (10) korrespondierend angeordnete Rastausnehmung oder eine zu der Rastausnehmung (141) des Grundkörpers (10) korrespondierend angeordnete Kalotte (212) angeordnet oder ausgebildet ist.

8. Vorrichtung nach einem der voranstehenden Ansprüche, **dadurch gekennzeichnet, dass** der Grundkörper (10) einen Absatz (110) aufweist, der sich an die Ausnehmung (15) anschließt und die Einsätze (20) einen korrespondierend zu dem Absatz (110) ausgebildeten, vorspringenden Rand (210) aufweisen.

9. Vorrichtung nach Anspruch 8, **dadurch gekennzeichnet, dass** der Rand (210) bündig mit dem Absatz (110) abschließt.

10. Vorrichtung nach Anspruch 8 oder 9, **dadurch gekennzeichnet, dass** in dem Rand (210) zumindest ein Eingriffsabschnitt (211) mit reduzierter Breite ausgebildet ist.

11. Vorrichtung nach einem der voranstehenden Ansprüche, **dadurch gekennzeichnet, dass** an dem Grundkörper (10) ein Verschlusselement (30) zur Abdeckung des Einsatzes (20) oder der Ausnehmung (15) gelagert ist.

12. Vorrichtung nach einem der voranstehenden Ansprüche, **dadurch gekennzeichnet, dass** in dem Einsatz (20) zumindest ein Aufnahmebereich (21, 22, 23, 24) für aufzunehmende Gegenstände angeordnet oder ausgeformt sind, der korrespondierend zu dem aufzunehmenden Gegenstand geformt ist.

13. Vorrichtung nach einem der voranstehenden Ansprüche, **dadurch gekennzeichnet, dass** in dem Einsatz (20) zumindest eine Schnittstelle (25, 26, 27) für einen Datentransfer und/oder Energietransfer angeordnet ist.

14. Vorrichtung nach einem der voranstehenden Ansprüche, **dadurch gekennzeichnet, dass** in dem Einsatz (20) ein Zigarettenanzünder (28) angeordnet ist.

15. Vorrichtung nach einem der voranstehenden Ansprüche, **dadurch gekennzeichnet, dass** die in dem Einsatz (20) ein feuerfester Aschenbechereinsatz (29) entnehmbar angeordnet ist.

16. Vorrichtung nach einem der voranstehenden Ansprüche, **dadurch gekennzeichnet, dass** die Ausnehmung (15) im Wesentlichen rechteckig mit abgerundeten Ecken ausgebildet ist.

17. Vorrichtung nach einem der voranstehenden Ansprüche, **dadurch gekennzeichnet, dass** an dem Einsatz (20) Zentrierelemente (215) korrespondierend zu der zumindest einen Ausrichteinrichtung (11, 12) angeordnet oder ausgebildet sind.

18. System aus einem Grundkörper (10) mit den Merkmalen zumindest eines voranstehenden Anspruches und mehreren auswechselbaren Einsätzen (20) mit den Merkmalen zumindest eines voranstehenden Anspruches.

## Claims

1. Device for holding objects in a vehicle, with a main body (10) in which a recess (15) for holding exchangeable insets (20) is formed, and at least one inset (20), wherein at least one aligning device (11, 12) for aligning the inset (20) in the recess (15) and at least one latching device (14) for securing same therein are arranged on the main body (10), **characterized in that** at least one interface (16) for providing power transmission and/or data transmission to the inset (20) is provided in the main body (10).

2. Device according to Claim 1, **characterized in that** the recess (10) is designed as a bowl-like receptacle with an insertion opening (13) for the respective inset (20).

3. Device according to Claim 1 or 2, **characterized in that** a plurality of aligning devices (11, 12) are arranged in different orientations on the main body (10) .

4. Device according to one of the preceding claims, **characterized in that** the interior space formed by the recess (15) is upholstered or coated.

5. Device according to one of the preceding claims, **characterized in that** the main body (10) is designed as a centre console (1) or part of a centre console (1) in a motor vehicle.

6. Device according to one of the preceding claims, **characterized in that** the latching device (14) is designed as a ball catch with a protruding spherical cap or a spherical-cap-shaped latching recess (141).

7. Device according to Claim 6, **characterized in that** a latching recess arranged in a manner corresponding to a spherical cap of the main body (10) or a spherical cap (212) arranged in a manner corresponding to the latching recess (141) of the main body (10) is arranged or formed on the inset (20) .

8. Device according to one of the preceding claims, **characterized in that** the main body (10) has a step (110) which adjoins the recess (15), and the insets (20) have a projecting edge (210) designed in a manner corresponding to the step (110).

9. Device according to Claim 8, **characterized in that** the edge (210) ends flush with the step (110).

10. Device according to Claim 8 or 9, **characterized in that** at least one engagement portion (211) having a reduced width is formed in the edge (210).

11. Device according to one of the preceding claims, **characterized in that** a closure element (30) for covering the inset (20) or the recess (15) is mounted on the main body (10).

12. Device according to one of the preceding claims, **characterized in that** at least one holding region (21, 22, 23, 24) for objects which are to be held is arranged or formed in the inset (20), the holding region being shaped in a manner corresponding to the object to be held.

13. Device according to one of the preceding claims, **characterized in that** at least one interface (25, 26, 27) for a data transfer and/or energy transfer is arranged in the inset (20).

14. Device according to one of the preceding claims, **characterized in that** a cigarette lighter (28) is arranged in the inset (20).

15. Device according to one of the preceding claims, **characterized in that** a fireproof ash-tray inset (29) is arranged removably in the inset (20).

16. Device according to one of the preceding claims, **characterized in that** the recess (15) is of substantially rectangular design with rounded corners.

17. Device according to one of the preceding claims, **characterized in that** centring elements (215) are arranged or formed on the inset (20) in a manner corresponding to the at least one aligning device (11, 12).

18. System consisting of a main body (10) having the features of at least one preceding claim and a plurality of exchangeable insets (20) having the features of at least one preceding claim.

## Revendications

1. Dispositif de logement d'objets dans un véhicule, comportant un corps de base (10) dans lequel est ménagé un évidement (15) pour loger des inserts interchangeables (20), et au moins un insert (20),
dans lequel
sur le corps de base (10), il est prévu au moins un moyen d'orientation (11, 12) pour orienter l'insert (20), et au moins un moyen d'enclenchement (14) pour immobiliser ledit insert dans l'évidement (15),
**caractérisé en ce que**
dans le corps de base (10), il est prévu au moins une interface (16) pour mettre à disposition une transmission de courant électrique et/ou de données à l'insert (20).

2. Dispositif selon la revendication 1,
**caractérisé en ce que**
l'évidement (10) est réalisé sous forme de logement en forme de coque pourvue d'une ouverture d'insertion (13) pour l'insert respectif (20).

3. Dispositif selon la revendication 1 ou 2,
**caractérisé en ce que**
plusieurs moyens d'orientation (11, 12) sont disposés dans différentes orientations sur le corps de base (10).

4. Dispositif selon l'une des revendications précédentes,
**caractérisé en ce que**
le volume intérieur formé par l'évidement (15) est rembourré ou revêtu.

5. Dispositif selon l'une des revendications précédentes,
**caractérisé en ce que**
le corps de base (10) est réalisé sous la forme d'une console centrale (1) ou sous la forme d'une partie d'une console centrale (1) dans un véhicule automobile.

6. Dispositif selon l'une des revendications précédentes,
**caractérisé en ce que**
le moyen d'enclenchement (14) est réalisé sous forme d'enclenchement sphérique comportant une calotte en saillie ou un évidement d'enclenchement (141) en forme de calotte.

7. Dispositif selon la revendication 6,
**caractérisé en ce que**
un évidement d'enclenchement disposé en correspondance d'une calotte du corps de base (10) ou une calotte (212) disposée en correspondance de l'évidement d'enclenchement (141) du corps de base (10) est disposé(e) ou réalisé(e) sur l'insert (20).

8. Dispositif selon l'une des revendications précédentes,
**caractérisé en ce que**
le corps de base (10) comprend un talon (110) qui se raccorde à l'évidement (15), et les inserts (20) présentent un bord en saillie (210) réalisé en correspondance du talon (110).

9. Dispositif selon la revendication 8,
**caractérisé en ce que**
le bord (210) se termine en affleurement avec le talon (110).

10. Dispositif selon la revendication 8 ou 9,
**caractérisé en ce que**
au moins une portion d'engagement (211) de largeur réduite est réalisée dans le bord (210).

11. Dispositif selon l'une des revendications précédentes,
**caractérisé en ce que**
un élément d'obturation (30) pour recouvrir l'insert (20) ou l'évidement (15) est monté sur le corps de base (10).

12. Dispositif selon l'une des revendications précédentes,
**caractérisé en ce que**
au moins une zone de logement (21, 22, 23, 24) pour des objets à loger est disposée ou formée dans l'insert (20), qui est formée en correspondance de l'objet à loger.

13. Dispositif selon l'une des revendications précédentes,
**caractérisé en ce que**
au moins une interface (25, 26, 27) pour un transfert de données et/ou un transfert d'énergie est disposée dans l'insert (20).

14. Dispositif selon l'une des revendications précédentes,
**caractérisé en ce que**
un allume-cigare (28) est disposé dans l'insert (20).

15. Dispositif selon l'une des revendications précédentes,
**caractérisé en ce que**
un insert formant cendrier réfractaire (29) est disposé de façon amovible dans l'insert (20).

16. Dispositif selon l'une des revendications précédentes,
**caractérisé en ce que**
l'évidement (15) est réalisé sensiblement en forme rectangulaire à coins arrondis.

17. Dispositif selon l'une des revendications précédentes,
**caractérisé en ce que**
des éléments de centrage (215) sont disposés ou réalisés en correspondance dudit au moins un moyen d'orientation (11, 12) sur l'insert (20).

18. Système constitué d'un corps de base (10) présentant les caractéristiques d'au moins une revendication précédente et de plusieurs inserts interchangeables (20) présentant les caractéristiques d'au moins une revendication précédente.
